# EUROPÄISCHE PATENTSCHRIFT

(11) **EP 2 677 511 B1**
(45) Veröffentlichungstag und Bekanntmachung des Hinweises auf die Patenterteilung: **16.07.2014**
(21) Anmeldenummer: 13184523.2
(22) Anmeldetag: 05.12.2011
(51) Int. Cl.: G08G 1/14, G08G 1/01, G01C 21/34, G08G 1/0968

(54) **Verfahren zur Ermittlung der Wahrscheinlichkeit, einen Parkplatz zu finden**
Method for determining the probability of finding a parking space
Procédé pour déterminer une probabilité de trouver un parking

(43) Veröffentlichungstag der Anmeldung: 25.12.2013
(62) Teilanmeldung aus: 11191926.2
(73) Patentinhaber: Skobbler GmbH, 10117 Berlin (DE)
(72) Erfinder: Kandal, Philipp, 88069 Tettnang (DE)
(74) Vertreter: von Eichel-Streiber, Caspar

(56) Entgegenhaltungen:
- WO-A1-2010/081545
- US-A1- 2008 048 885

## Beschreibung

Die vorliegende Erfindung betrifft ein Verfahren zum Ermitteln der Wahrscheinlichkeit, an einem vorgegebenen Wegabschnitt eines eine Mehrzahl von Wegabschnitten aufweisenden Gebietes innerhalb einer bestimmten Zeitspanne einen Parkplatz zu finden. Sie betrifft ferner ein Verfahren zur Anzeige der Wahrscheinlichkeit, in einem bestimmten Wegabschnitt einen Parkplatz zu finden, auf einem digital gespeicherte Kartendaten sowie eine Anzeigeeinrichtung zur Anzeige der Kartendaten aufweisenden, funkortungsgestützten, insbesondere satellitenfunkortungsgestützten Navigationsgerät. Ein solches Verfahren ist beispielsweise aus der WO 2010/081 545 A1 bekannt.

Funkortungsgestützte, insbesondere satellitenfunkortungsgestützte Navigation ist seit langem bekannt. Sie dient insbesondere Kraftfahrzeugführern zur Orientierung entlang einer Strecke zu einem gewünschten Fahrziel. Derartige Navigationsverfahren basieren auf satellitengestützter Funkortung, heute dem sogenannten GPS-System. Moderne Navigationsgeräte enthalten digitale Kartendaten, auf die sie zurückgreifen, um entsprechende Fahrrouten zu planen. Die Planung erfolgt dabei typischerweise aufgrund der Eingabe einer Zieladresse bzw. eines Zielpunktes, zu dem ausgehend von der aktuellen Position (der Startposition) das Navigationsgerät die optimale Route berechnet.

Navigationsgeräte gibt es dabei in der vielfältigsten Ausprägung. So sind stationär in Kraftfahrzeugen verbaute bordeigene Navigationsgeräte ebenso bekannt, wie mobile Geräte. Bei den mobilen Geräten gibt es solche, die ausschließlich als Navigationsgerät fungieren. Aktuell erfreuen sich aber auch Multifunktionsgeräte wie etwa Smartphones oder Tablet-PC's großer Beliebtheit und können durch Aufspielen einer entsprechenden Anwendungssoftware mit einer Navigationsfunktion ausgestattet und somit als Navigationsgeräte verwendet werden. Denn in vielen dieser mobilen Multifunktionsgeräte sind bereits heute Satellitennavigationsempfänger (GPS-Empfänger) installiert, womit diese Geräte über die wesentliche Hardware-Voraussetzung zur Verwendung als Navigationsgerät verfügen. Einzelne Anbieter haben sich insoweit darauf spezialisiert, Applikationssoftware für derartige Geräte anzubieten, die digitale Kartendaten zur Verfügung stellt, Routenberechnungsroutinen und sonstige Funktionalitäten eines Navigationsgerätes bereitstellt und damit das mobile Endgerät zum Navigationsgerät aufrüstet.

Neben der reinen Routenführung von einem Start- zu einem Zielpunkt bieten moderne Navigationsgeräte weitere Funktionen, wie etwa das zur Verfügung Stellen von Informationen über sogenannte Points of Interest, POI, z.B. Sehenswürdigkeiten, Museen, öffentliche Plätze oder dgl. Auch sind dynamische Routenführungen bekannt, in denen Verkehrssituationen entlang der geplanten Route und Streckenführung berücksichtigt werden, wie z.B. Staus. Die Informationen über derartige Staus erhalten Navigationsgeräte teilweise über entsprechend codiert gesendete Signale von Radiostationen mit Verkehrsmeldungen oder aber auch durch Auswertung von Bewegungsdaten von weiteren Nutzern solcher Navigationsgeräte. Wenn sich die Bewegung der Nutzer erheblich verlangsamt, insgesamt ins Stocken gerät, so wird von dem Anbieter eines Navigationssystems, der diese Bewegungsprofile seiner Nutzer abfragt, auf einen Stau bzw. stockenden Verkehr im Bereich dieser Strecke bzw. des Streckenabschnittes, in dem diese Veränderung des Bewegungsprofils seiner Nutzer auftritt, geschlossen und eine entsprechende Staumeldung an die Navigationsgeräte ausgegeben.

All diese genannten Funktionen dienen der Leitung eines Nutzers von einem Ausgangs- zu einem Zielpunkt.

Dabei ist bekannt, dass ein Großteil der Fahrzeit eines Kraftfahrzeugführers darauf verwandt wird, an seinem Reiseziel einen Parkplatz zu suchen. In großen Städten parken die meisten Kraftfahrzeugführer ihre Kraftfahrzeuge am Straßenrand und kreisen somit, einmal am Fahrziel angekommen, ungeleitet solange um dieses Fahrziel herum durch die anliegenden Straßen, bis sie einen entsprechenden Parkplatz am Straßenrand gefunden haben. Hierbei geht nicht nur wertvolle Zeit verloren, es kommt insbesondere dann, wenn die Kraftfahrzeugführer in Bereichen mit geringer Parkplatzdichte wiederholt ihre Schleifen ziehen, zu einem erhöhten Verkehrsaufkommen, welches im schlimmsten Fall zu Stauungen oder Stockungen führen kann.

Bereits heute gibt es Navigationsgeräte bzw. -systeme, die für den Nutzer eine Möglichkeit zum geführten Aufsuchen eines Parkplatzes bieten. Diese Navigationsgeräte bzw. -systeme beschränken sich jedoch darauf, den Nutzer zu einem kostenpflichtigen Parkplatz, z.B. einem Parkhaus, zu leiten, in welchem freie Stellplätze vorhanden sind. Im Bereich von z.B. Innenstädten oder dgl., wo entsprechende Parkmöglichkeiten gegeben sind, mag diese Art der Zielführung ja noch sinnvoll und erfolgversprechend sein. Im Bereich von z.B. Wohngebieten, in denen typischerweise keine kostenpflichtigen Parkplätze bzw. Parkhäuser vorhanden sind, hilft ein entsprechendes System indes nicht weiter.

Hier setzen die Erfinder mit der Erfindung an und haben es sich zur Aufgabe gemacht, für ein funkortungsgestütztes, insbesondere satellitenfunkortungsgestütztes Navigationssystem ein Verfahren zum Ermitteln der Wahrscheinlichkeit, an einem vorgegebenen Wegabschnitt eines eine Mehrzahl von Wegabschnitten aufweisenden Gebietes innerhalb einer bestimmten Zeitspanne einen Parkplatz zu finden, anzugeben. Weiterer Aspekt der der Erfindung zugrunde liegenden Aufgabe ist es, ein Verfahren zur Anzeige einer solchen Wahrscheinlichkeit auf einem Navigationsgerät anzugeben.

Diese Aufgabe wird zunächst gelöst durch ein Verfahren zum Ermitteln der Wahrscheinlichkeit, an einem vorgegebenen Wegabschnitt eines eine Mehrzahl von Wegabschnitten aufweisenden Gebietes innerhalb einer bestimmten Zeitspanne einen Parkplatz zu finden, wie es in Anspruch 1 angegeben ist. Vorteilhafte Weiterbildungen dieses erfindungsgemäßen Aspektes sind in den abhängigen Ansprüchen 2 bis 4 angegeben. Ein weiterer Aspekt der Lösung besteht in einem Verfahren zur Anzeige der Wahrscheinlichkeit, in einem bestimmten Wegabschnitt einen Parkplatz zu finden, auf einem digital gespeicherte Kartendaten sowie eine Anzeigeeinrichtung zur Anzeige der Kartendaten aufweisenden, funkortungsgestützten, insbesondere satellitenfunkortungsgestützten, Navigationsgerät mit den Merkmalen des Anspruchs 5. Vorteilhafte Weiterbildungen hierzu sind in den abhängigen Ansprüchen 6 bis 8 angegeben.

In einem ersten Aspekt wird mit der Erfindung ein Verfahren zum Ermitteln der Wahrscheinlichkeit, an einem vorgegebenen Wegabschnitt eines eine Mehrzahl von Wegabschnitten aufweisenden Gebietes innerhalb einer bestimmten Zeitspanne einen Parkplatz zu finden, angegeben. Hierzu greift das Verfahren erfindungsgemäß auf Bewegungsprofile von Nutzern funkortungsgestützter, insbesondere satellitenfunkortungsgestützter, Navigationsgeräte in dem Gebiet zurück. Diese Bewegungsprofile können sehr leicht aufgenommen werden, indem z.B. ein bestimmtes Navigationsgerät anhand einer Kennung seines Funkempfängers identifiziert wird oder aber auch, wenn das Gerät über eine Anschlussmöglichkeit an ein Funktelekommunikationsnetz verfügt, über dessen Netzkennung, identifiziert wird und über die Ortung aus dem Funkortungsverfahren seine Position und seine Bewegungsdaten festgestellt werden. Da heutzutage Nutzer in großer Zahl funkortungsgestützte Navigationsgeräte einsetzen, können entsprechende Daten in gleichfalls großer Menge und Streuung gewonnen werden, so dass diese statistisch ausgewertet werden können. Erfindungsgemäß wird dabei für jeden Nutzer, wenn dieser einen Parkplatz gefunden hat, ein Ereignis "Parkplatz gefunden" festgestellt. Die Kriterien hierfür können beispielsweise ein Stopp der Bewegung für eine eine festgelegte Toleranzzeit übersteigende Zeit und/oder ein Entfernen der Position des Navigationsgerätes außerhalb eines Straßenverlaufes sein (vgl. Anspruch 2). Die Festlegung einer Toleranzzeit, die ein Stopp der Bewegung übersteigen muss, ist sinnvoll, damit nicht jeder Halt an einer Verkehrsampel oder vor einem Hindernis als Ereignis "Parkplatz gefunden" gewertet wird. Entsprechend wird die Toleranzzeit so festzulegen sein, dass sie länger ist als typische Standzeiten vor Verkehrszeichen wie etwa Ampeln, Stoppschildern oder dgl. wie auch typische Haltezeiten vor Hindernissen auf der Fahrbahn, wie etwa auf der Fahrbahn parkenden Fahrzeugen, Verkehrsberuhigungspollern oder - inseln oder dgl. Ein Entfernen der Position des Navigationsgerätes außerhalb des Straßenverlaufes kann insbesondere dann ein Anzeichen für das Ereignis "Parkplatz gefunden" sein, wenn das Navigationsgerät ein mobiles ist, welches der Führer eines Kraftfahrzeuges beim Verlassen des Fahrzeuges mit sich führt, dieses dann entlang des Bürgersteiges in Richtung eines Gebäudes mitnimmt. Da der Kraftfahrzeugführer dann ersichtlich nicht mehr auf der Straße fährt, sondern sein Kraftfahrzeug abgestellt hat, indiziert ein solches Vorkommnis das Ereignis "Parkplatz gefunden". Denkbar sind auch noch andere Kriterien wie etwa eine typische Veränderung der Bewegungsgeschwindigkeit, die eintritt, wenn ein Fahrzeugführer sein Fahrzeug verlässt und sich zu Fuß weiter bewegt.

Wird ein solches Ereignis "Parkplatz gefunden" festgestellt, so wird gemäß dem erfindungsgemäßen Verfahren der Wegabschnitt, in dem das Ereignis "Parkplatz gefunden" eingetreten ist, erfasst. Bei diesem Wegabschnitt handelt es sich um einen solchen, der zu dem Zeitpunkt, als der Führer des Kraftfahrzeuges diesen befahren hat, zumindest einen freien Parkplatz aufgewiesen hatte, nämlich denjenigen, den der Fahrzeugführer angesteuert hat. Ein solcher Wegabschnitt kann beispielsweise ein Straßenabschnitt zwischen zwei einmündenden Querstraßen sein. Es kommen aber auch andere Einteilungen solcher Wegabschnitte in Betracht, z.B. bei sehr langen Straßenabschnitten Unterteilungen anhand einer bestimmten Hausnummer eines anliegenden Gebäudes oder dgl. Schließlich wird nach dem erfindungsgemäßen Verfahren auch die Fahrzeit erfasst, die der Nutzer in jedem der von ihm durchfahrenen Wegabschnitte bis zum Eintreten des Ereignisses "Parkplatz gefunden" aufgewendet hat. Durchfährt ein Nutzer einen Wegabschnitt, in welchem er schließlich einen Parkplatz findet, mehr als einmal, so kann die Gesamtfahrzeit, die er beim mehrmaligen Durchfahren des Wegabschnittes aufgewendet hat, durch Addieren der einzelnen Fahrzeiten bestimmt und berücksichtigt werden.

Für das erfindungsgemäße Verfahren werden nun aus den für eine Vielzahl von Nutzern so gewonnenen Daten Wahrscheinlichkeiten ermittelt, innerhalb der bestimmten Zeitspanne einen Parkplatz in dem Wegabschnitt zu finden. So kann beispielsweise als vorbestimmte Zeitspanne eine Zeit von einer Minute angenommen werden, und es werden die Zahlen der Nutzer, die entlang dieses Wegabschnittes auf der Parkplatzsuche gefahren sind, ins Verhältnis gesetzt zu denjenigen, die innerhalb der vorgegebenen Zeitspanne von einer Minute Fahrzeit in diesem Wegabschnitt einen Parkplatz gefunden haben. Dieses Verhältnis stellt dann die Wahrscheinlichkeit dar. Bei der Berechnung können noch weitere Kriterien Einfluss nehmen, z.B. ist es möglich, diejenigen Wegabschnitte, die ein Parkplatz suchender Nutzer durchfahren, darin jedoch keinen Parkplatz gefunden hat, nur dann zu werten bzw. die darin verbrachte Fahrzeit anzurechnen, wenn diese innerhalb einer bestimmten Entfernung zum Fahrziel liegen, insbesondere näher als der Wegabschnitt, in dem der Nutzer schließlich einen Parkplatz finden konnte. Es lassen sich noch weitere Kriterien für eine verzweigtere und genaue Analyse und Bestimmung der Wahrscheinlichkeit finden. Entscheidend ist hier, dass das erfindungsgemäße Verfahren darauf aufbaut, dass Nutzer von funkortungsgestützten Navigationssystemen in ihrem Bewegungsprofil verfolgt werden können, dass entsprechende Daten über Parkplatzsuche mithin automatisch erfasst werden können, es hierzu insbesondere keiner aktiven Mithilfe der Nutzer des Navigationssystems bedarf. Das System ist dabei ein solches, welches durch fortwährende weitere Auswertung der Daten über die Zeit immer genauer wird, da die Anzahl der Stichproben in dem statischen Auswertungsverfahren ständig anwächst. Somit können über den Verlauf der Zeit immer genauere und zuverlässigere Aussagen über die Wahrscheinlichkeit, an einem vorgegebenen Wegabschnitt innerhalb einer bestimmten Zeitspanne einen Parkplatz zu finden, getroffen werden. Die vorgegebene Zeitspanne, zu der vorstehend als Beispiel eine Minute genannt worden ist, ist nicht auf diese Zeit festgelegt. Ebenso gut können kürzere Zeitspannen wie etwa eine halbe Minute, können aber auch längere Zeitspannen wie etwa zwei Minuten oder fünf Minuten gewählt werden. Hierbei kann es insbesondere auch in Betracht kommen, dass die vorgegebene Zeitspanne wählbar ist bzw. dass diese je nach "Parkplatzdruck" in einem Gebiet dynamisch angepasst werden kann. Sind in einem Gebiet Parkplätze vergleichsweise rar, kann die vorgegebene Zeitspanne höher angesetzt werden als in solchen Gebieten, in denen Parkplätze in größerer Zahl zur Verfügung stehen.

Eine weitere vorteilhafte Weiterbildung der Erfindung besteht darin, dass zusätzlich zu den in Anspruch 1 mit a), b) und c) genannten Daten noch der Wochentag und/oder die Tageszeit erfasst werden, an dem und/oder zu der das Ereignis "Parkplatz gefunden" eingetroffen ist. Denn häufig ist die Parkplatzsituation in einem Gebiet stark abhängig von der Tageszeit und auch vom Wochentag. In Wohngebieten, in denen ein großer Anteil von Pendlern leben, die also während der typischen Arbeitszeiten (z.B. Wochentags zwischen 8.00 und 18.00 Uhr) mit ihrem Auto unterwegs sind, lassen sich zu dieser Tageszeit häufig sehr viel leichter Parkplätze finden als des Abends, wenn die Anwohner von der Arbeitsstätte zurück sind und mit ihren Kraftfahrzeugen die vorhandenen Parkplätze belegen. Auch ist in solchen Gegenden die Parksituation stark unterschiedlich zwischen Werktagen und Wochenenden bzw. Feiertagen. In anderen Gegenden, z.B. in Innenstädten, mag sich die Parkplatzsituation gerade umgekehrt verhalten. Dort ist der Parkraum in Stoßzeiten der Arbeit- und Einkaufszeiten, häufig zwischen 10.00 und 18.00 Uhr besonders eng, wohingegen abends, insbesondere nach Geschäftsschluss, Parkplätze in größerer Zahl zur Verfügung stehen. Um diese zeitliche Dynamik bei der Ermittlung der Wahrscheinlichkeit, an einem vorgegebenen Wegabschnitt innerhalb einer bestimmten Zeitspanne einen Parkplatz zu finden, mit abbilden zu können, ist es also von Vorteil, diese Daten bei der Erfassung des Bewegungsprofils von Nutzern mit aufzunehmen. Dabei kann die Erfassung der Tageszeit und/oder des Wochentages zusammenfallend mit dem Ereignis "Parkplatz gefunden" vorgenommen werden, wie dies im Anspruch vorgeschlagen wird. Selbstverständlich kann - im Ergebnis gleichwertig - aber auch die Aufnahme insbesondere der Tageszeit mit dem Erkennen einer Parkplatzsuche verbunden werden, also in einem engen zeitlichen Zusammenhang mit dem Ereignis "Parkplatz gefunden" stehen, welches nicht das einzige, die Speicherung des Zeitpunktes auslösende Moment ist.

Von Vorteil ist es ferner, wenn, wie gemäß einer weiteren vorteilhaften Weiterbildung der Erfindung vorgesehen, die Auswertung des Bewegungsprofils des Nutzers in dem Gebiet nach den erfindungsgemäßen Kriterien nur dann erfolgt, wenn der Nutzer als einen Parkplatz suchend erkannt wird. Nur dann, wenn feststeht, dass ein Nutzer tatsächlich einen Parkplatz sucht, kann die Aufnahme der genannten Daten die gewünschten Informationen liefern. Als Parkplatz suchend kann ein Nutzer dabei insbesondere dann erkannt werden, wenn er sich in dem Gebiet über eine oberhalb einer vorgegebene Mindestzeit liegende Zeitspanne mit einer eine Mindestgeschwindigkeit unterschreitenden Geschwindigkeit bewegt. Typisch für Parkplatz suchende Nutzer ist die langsame Fahrt entlang einer Suchstrecke, während der er versucht, freie Parkplätze am Wegesrand auszumachen. Recht häufig erfolgt die Fahrt dann lediglich in Schrittgeschwindigkeit. Um auch hier wiederum unterscheiden zu können zwischen dem langsamen Annähern an eine Kreuzung, an eine auf rot geschaltete Ampel oder dgl. und der Fahrt während einer Parkplatzsuche, empfiehlt sich die Vorgabe des Kriteriums einer Mindestzeit, für die die langsame Fahrt andauert. Auch hier wird eine solche Zeit gewählt werden, die gerade oberhalb einer Zeitspanne liegt, wie sie typisch ist für die Annäherung an Kreuzungen in langsamer Fahrt und dgl. Als weiteres oder alternatives Kriterium dafür, dass der Nutzer des Navigationsgerätes einen Parkplatz sucht, kann dienen, wenn erkannt wird, dass er wenigstens einen Wegabschnitt ein zweites Mal passiert. Denn häufig ist die Parkplatzsuche damit verbunden, dass Weg- bzw. Straßenabschnitte mehrfach durchfahren werden, in der Hoffnung, es sei dort in der Zwischenzeit ein Parkplatz frei geworden. Selbstverständlich können auch weitere Kriterien Anwendung finden, um die Feststellung zu treffen, dass der Nutzer sich auf der Suche nach einem Parkplatz befindet, und somit die Aufzeichnung und Auswertung des Bewegungsprofils gemäß dem anspruchsgemäßen Verfahren auszulösen.

Ein zweiter Aspekt der Erfindung liegt in einem Verfahren zur Anzeige der Wahrscheinlichkeit, in einem bestimmten Wegabschnitt einen Parkplatz zu finden, auf einem digital gespeicherte Kartendaten sowie eine Anzeigeeinrichtung zur Anzeige der Kartendaten aufweisenden, funkortungsgestützten, insbesondere satellitenfunkortungsgestützten, Navigationsgerät. Die nach einem Verfahren wie oben beschrieben ermittelten Wahrscheinlichkeitsdaten werden dabei erfindungsgemäß in wenigstens zwei Wahrscheinlichkeitsgruppen eingeteilt, und es erfolgt für jeden auf der Anzeigeeinrichtung wiedergegebenen Karte verzeichneten Wegabschnitt eine graphische Darstellung der Wahrscheinlichkeitsgruppe, die diesem Wegabschnitt zugeordnet ist. So kann ein Nutzer des Navigationsgerätes auf der ihm von seinem Gerät dargestellten Karte sehr schnell erkennen, entlang welcher Wegabschnitte er mit größerer Wahrscheinlichkeit einen Parkplatz antreffen wird und im Bereich seines Zielortes gezielt diese Wegabschnitte ansteuern bzw. zumindest zuerst anfahren, wenn er einen Parkplatz sucht. Diese Anzeige der graphischen Darstellung der Wahrscheinlichkeitsgruppe kann insbesondere von der Auswahl eines entsprechenden Menüpunktes des Navigationsgerätes abhängig gemacht werden und muss mithin nicht dauerhaft erfolgen. So kann ein Nutzer beispielsweise dann, wenn er seinen Zielort erreicht hat bzw. sich diesem nähert, in seinem Navigationsgerät einen entsprechenden Menüpunkt ansteuern, der ihm dann in der dargestellten Karte die graphische Darstellung der Wahrscheinlichkeitsgruppen, Parkplätze zu finden, für die einzelnen Wegabschnitte aufzeigt. Es kann eine Darstellung dieser Wahrscheinlichkeitsgruppen aber auch abhängig gemacht werden von einer Skalierung der angezeigten Karte. Wird eine besonders große und detaillierte Anzeige, also ein großer Maßstab verwendet, so können die Wahrscheinlichkeitsgruppen mit angezeigt werden. Denn typischerweise wird ein Nutzer des Navigationsgerätes im Bereich seines Fahrzieles, wenn er sich auf die Parkplatzsuche einstellt, einen besonders großen Maßstab für die Darstellung seiner Karte wählen.

Eine besonders einfache und für den Nutzer plakative Anzeige ergibt sich dann, wenn wie gemäß einer vorteilhaften Weiterbildung nach Anspruch 6 vorgesehen, insgesamt drei Wahrscheinlichkeitsgruppen gebildet werden mit Werten hoher Wahrscheinlichkeit in einer ersten Wahrscheinlichkeitsgruppe, Werten mittlerer Wahrscheinlichkeit in einer zweiten Wahrscheinlichkeitsgruppe und Werten geringer Wahrscheinlichkeit in einer dritten Wahrscheinlichkeitsgruppe. Diesen drei Wahrscheinlichkeitsgruppen können dann farbige Kennzeichnungen und Markierungen zugeordnet werden, wobei die erste Wahrscheinlichkeitsgruppe eine grüne Kennzeichnung, eine zweite eine gelbe und die dritte eine rote Kennzeichnung erfährt. Dabei können beispielsweise solche Wahrscheinlichkeiten, einen Parkplatz innerhalb der vorgegebenen Zeitspanne zu finden, die oberhalb von 50% liegen, der ersten Wahrscheinlichkeitsgruppe zugeordnet werden, Wahrscheinlichkeiten, die zwischen 25 und 50% liegen der zweiten und Wahrscheinlichkeiten von unter 25% der dritten Gruppe. Bei der Darstellung der Karte können dann z.B. seitlich entlang der einzelnen Wegabschnitte auf der Karte grüne, gelbe bzw. rote Linien aufgezeigt werden, um zu verdeutlichen, mit welcher Wahrscheinlichkeit der Nutzer des Navigationsgerätes dort in annehmbarer Zeit auf einen Parkplatz trifft.

Eine zusätzliche Information kann dem Nutzer zuteil werden, wenn bei dem Verfahren in den digital gespeicherten Kartendaten Informationen zu Parkverboten enthalten sind und diese ebenfalls zur Anzeige gebracht werden. So kann der Nutzer bei seiner Parkplatzsuche solche Abschnitte von vornherein vermeiden, in denen das Parken nicht gestattet ist.

Erfolgt die Anzeige dann, wenn bei der Ermittlung der Wahrscheinlichkeit eine Zeitabhängigkeit (Abhängigkeit vom Wochentag und/oder der Tageszeit) erfasst worden ist, ebenso zeitabhängig, so kann der Nutzer des Navigationsgerätes diese Dynamik mit berücksichtigen, wird also abhängig von der jeweiligen Tageszeit und/oder abhängig vom Wochentag mit den zutreffenden Informationen versorgt, die ihm bei seiner Parkplatzsuche helfen bzw. ihn unterstützen.

Unter Rückgriff auf die mit dem erfindungsgemäßen Verfahren ermittelten Wahrscheinlichkeit, einen Parkplatz zu finden, kann ein gezielt für die Parkplatzsuche optimiertes Verfahren zum Leiten eines Nutzers eines funkortungsgestützten, insbesondere satellitenfunkortungsgestützten Navigationsgerätes entlang einer Route durchgeführt werden. Bei einem solchen Verfahren wird in dem Navigationsgerät eine Endlosroute entlang eines Streckenplans um das Fahrziel herum berechnet, und der Nutzer wird entlang dieser Route solange geführt, bis er einen Parkplatz gefunden hat. Insoweit weicht diese Art der Routenberechnung und Routenführung von der klassischen Berechnung der Route und Führung, wie sie zum Führen eines Nutzers zu einem Fahrziel eingesetzt wird, ab. Denn dort wird eine lineare Routenführung vorgenommen und eine entsprechende Routenberechnung unternommen, die den Nutzer von einem Startpunkt zu einem Zielpunkt führt. Bei der Parkplatzsuche gibt es indes keinen Zielpunkt, der etwa bekannt wäre. Das Ziel ist der Parkplatz, wobei für das Navigationssystem nicht ersichtlich ist, wo dieser zu finden ist. Das Navigationssystem erkennt bei diesem Verfahren erfindungsgemäß lediglich Wahrscheinlichkeiten, an einem Routenabschnitt, der einem Wegabschnitt in natura entspricht, innerhalb einer bestimmten Zeitspanne einen Parkplatz zu finden und kann seine Routenberechnung darauf stützen bzw. diese Wahrscheinlichkeiten mit einbeziehen. Diese Wahrscheinlichkeit ist dabei erfindungsgemäß nach einem Verfahren nach einem der Ansprüche 1 bis 4 bestimmt. Die einzelnen Routenabschnitte, aus der das Navigationsgerät sequenziell aufeinanderfolgend die Endlosroute aufbaut, werden in ihrer Rangigkeit, d.h. ihrer Position im zeitlichen Ablauf der Route erfindungsgemäß nach den Kriterien
i) Entfernung des jeweiligen Routenabschnittes vom Fahrziel; und
ii) Wahrscheinlichkeit, an dem jeweiligen Routenabschnitt innerhalb einer bestimmten Zeitspanne einen Parkplatz zu finden,
ermittelt. Dabei erfolgt eine Gewichtung der Relevanz der jeweiligen Kriterien i) und ii), anhand derer dann die einzelnen Routenabschnitte zu der Endlosroute aneinandergereiht werden.

Diese Relevanzgewichtung kann insbesondere so erfolgen, dass zunächst Routenabschnitte verwendet und eingefügt werden, die in der Nähe zum Fahrziel liegen, insbesondere unmittelbar daran angrenzen, anschließend weiter entfernte Routenabschnitte bevorzugt werden, die eine hohe Wahrscheinlichkeit haben, innerhalb einer vorgegebenen Zeit dort einen Parkplatz zu finden, erst danach solche, bei denen die Wahrscheinlichkeit geringer wird. Dabei wird ein Algorithmus für die Routenplanung zu wählen sein, der einen Kompromiss zwischen Fahrzeit bei der Parkplatzsuche (also Wahrscheinlichkeit des Auffindens eines Parkplatzes an dem Routenabschnitt) und Entfernung vom Zielort (also von dem Parkplatz letztlich zu dem Zielort zurückzulegende Laufstrecke) bietet.

## Patentansprüche

1. Verfahren zum Ermitteln der Wahrscheinlichkeit, an einem vorgegebenen Wegabschnitt eines eine Mehrzahl von Wegabschnitten aufweisenden Gebietes innerhalb einer bestimmten Zeitspanne einen Parkplatz zu finden, wobei Bewegungsprofile von Nutzern funkortungsgestützter, insbesondere satellitenfunkortungsgestützter, Navigationsgeräte in dem Gebiet aufgenommen und statistisch ausgewertet werden, wobei für jeden Nutzer
a) ein Ereignis "Parkplatz gefunden" festgestellt wird;
b) der Wegabschnitt, in dem das Ereignis "Parkplatz gefunden" eingetreten ist, erfasst wird;
c) die Fahrzeit erfasst wird, die der Nutzer in jedem der Wegabschnitte bis zum Eintreten des Ereignisses "Parkplatz gefunden" aufgewendet hat,
und wobei aus den für eine Vielzahl von Nutzern so gewonnenen Daten die Wahrscheinlichkeit, innerhalb der bestimmten Zeitspanne in dem Wegabschnitt einen Parkplatz zu finden, ermittelt wird.

2. Verfahren nach Anspruch 1, **dadurch gekennzeichnet, dass** in Schritt a) ein Stopp der Bewegung für eine eine festgelegte Toleranzzeit übersteigende Zeit und/oder ein Entfernen der Position des Navigationsgerätes außerhalb eines Straßenverlaufes als Ereignis "Parkplatz gefunden" gewertet wird.

3. Verfahren nach einem der vorhergehenden Ansprüche, **dadurch gekennzeichnet, dass** für jeden Nutzer ferner Wochentag und/oder Tageszeit erfasst werden, an dem und/oder zu der das Ereignis "Parkplatz gefunden" eingetreten ist.

4. Verfahren nach einem der vorhergehenden Ansprüche, **dadurch gekennzeichnet, dass** die Auswertung des Bewegungsprofils des Nutzers in dem Gebiet nach den vorstehend genannten Kriterien nur dann erfolgt, wenn der Nutzer als einen Parkplatz suchend erkannt wird, wobei der Nutzer dann als einen Parkplatz suchend erkannt wird, wenn er sich in dem Gebiet länger als eine vorgegebene Mindestzeit mit einer eine Mindestgeschwindigkeit unterschreitenden Geschwindigkeit bewegt und/oder wenn er wenigstens einen Wegabschnitt wenigstens ein zweites Mal passiert.

5. Verfahren zur Anzeige der Wahrscheinlichkeit, in einem bestimmten Wegabschnitt einen Parkplatz zu finden, auf einem digital gespeicherte Kartendaten sowie eine Anzeigeeinrichtung zur Anzeige der Kartendaten aufweisenden, funkortungsgestützten, insbesondere satellitenfunkortungsgestützten, Navigationsgerät, wobei nach einem Verfahren gemäß einem der vorhergehenden Ansprüche ermittelte Wahrscheinlichkeitsdaten in wenigstens zwei Wahrscheinlichkeitsgruppen eingeteilt werden und für jeden auf der Karte verzeichneten Wegabschnitt eine graphische Darstellung der Wahrscheinlichkeitsgruppe erfolgt.

6. Verfahren nach Anspruch 5, **dadurch gekennzeichnet, dass** insgesamt drei Wahrscheinlichkeitsgruppen gebildet werden, von denen eine erste Werte hoher Wahrscheinlichkeit, eine zweite Werte mittlerer Wahrscheinlichkeit und eine dritte Werte geringer Wahrscheinlichkeit umfassen, wobei auf der Anzeige der Kartendaten Wegabschnitte mit einer Wahrscheinlichkeit aus der ersten Wahrscheinlichkeitsgruppe mit einer grünen Kennzeichnung, Wegabschnitte mit einer Wahrscheinlichkeit aus der zweiten Wahrscheinlichkeitsgruppe mit einer gelben Kennzeichnung und Wegabschnitte mit einer Wahrscheinlichkeit aus der dritten Wahrscheinlichkeitsgruppe mit einer roten Kennzeichnung versehen werden.

7. Verfahren nach einem der Ansprüche 5 oder 6, **dadurch gekennzeichnet, dass** die digital gespeicherten Kartendaten Informationen zu Parkverboten enthalten und diese ebenfalls zur Anzeige gebracht werden.

8. Verfahren nach einem der Ansprüche 5 bis 7, **dadurch gekennzeichnet, dass** die Anzeige der nach einem Verfahren nach Anspruch 3 oder Anspruch 4, soweit dieser auf Anspruch 3 rückbezogen ist, ermittelte Wahrscheinlichkeiten in Abhängigkeit vom Wochentag und/oder der Tageszeit, an dem und/oder zu der die Anzeige erfolgt, angezeigt werden.

## Claims

1. A method to determine the probability, on a prescribed itinerary section of an area exhibiting a plurality of itinerary sections, to find a parking space within a specified time span, whereas movement profiles of users of radiolocation-based navigation devices, in particular satellite radiolocation-based devices in the area are recorded and interpreted statistically, whereas for every user
a) an event "parking space found" is noted;
b) the itinerary section, in which the event "parking space found" cropped up, is determined;
c) the driving time is detected, which the user has applied in each of the itinerary sections until the event "parking space found" has taken place,
and whereas the probably of finding a parking space within the set time span in the itinerary section is determined from the data so collected for a plurality of users.

2. A method of claim 1, **characterised in that** in step a) a stop of the movement for a time exceeding a set tolerance time span and/or the navigation device moving outside a route is interpreted as an event "parking space found".

3. A method as claimed in any of the preceding claims, **characterised in that** for every use moreover the day of the week and/or of the time of the day are detected at which the event "parking space' cropped up.

4. A method as claimed in any of the preceding claims, **characterised in that** the interpretation of the movement profile of the user in the area according to the aforementioned criteria only takes place if the user is recognised as looking for a parking space, whereas the user is then recognised as looking for a parking space, when he is moving in the area longer than for a prescribed minimum time with a speed falling under a lowest speed and/or when he passes through at least one itinerary section at least for a second time.

5. A method of displaying the probability of finding a parking space in a set itinerary section on a radiolocation-based, in particular satellite radiolocation-based navigation device, showing digitally stored map data, as well as a display device for showing the map data whereas in a method according to one of the previous claims determined probability data are divided into at least two probability groups and for every itinerary section specified on the map the probability group is represented schematically.

6. A method of claim 5, **characterised in that** in total three probability groups are formed, among which a first group contains values of high probability, a second group values of average probability and a third group values of low probability, whereas on the display of the map data itinerary sections are provided with a probability from the first probability group in green, itinerary sections with a probability from the second probability group in yellow and itinerary sections with a probability from the third probability group in red.

7. The method according to any of the claims 5 or 6, **characterised in that** the digitally stored map data contains pieces of information regarding parking prohibitions and these are also displayed.

8. The method according to one of the claims 5 to 7, **characterised in that** the display resulting from the method according to claim 3 or claim 4, as referred to claim 3, show the determined probabilities according to the day of the week and/or the time of the day on which said display took place.

## Revendications

1. Procédé de détermination de la probabilité, de trouver une place de stationnement dans une portion de route prédéterminée d'une zone présentant une pluralité de portions de route dans un laps de temps donné, où l'on enregistre les profils de mouvement d'utilisateurs de GPS de localisation radio, en particulier GPS de localisation radio par satellite dans la zone pour les interpréter de manière statistique, où l'on observe pour chaque utilisateur
a) un évènement "place de stationnement trouvée";
b) l'on détecte la portion de route dans laquelle l'évènement "place de stationnement trouvée" s'est produit;
c) l'on détecte le temps de conduite, que l'utilisateur a mis dans chacune des portions de route jusqu'à la survenance de l'évènement "place de stationnement trouvée",
et où l'on détermine la probabilité de trouver une place de stationnement dans le laps de temps donné dans la portion de route, à partir des données ainsi recueillies pour une pluralité d'utilisateurs.

2. Procédé selon la revendication 1, **caractérisé en ce que** l'on interprète à l'étape a) un arrêt du mouvement pour une durée dépassant un temps de tolérance défini et/ou la sortie du GPS d'un trajet donné comme évènement "place de stationnement trouvée".

3. Procédé selon l'une quelconque des revendications précédentes, **caractérisé en ce que** l'on entre pour chaque utilisateur en outre le jour de la semaine et l'heure de la journée correspondant au moment auquel l'évènement "place de stationnement trouvée" est survenu.

4. Procédé selon l'une quelconque des revendications précédentes, **caractérisé en ce que** l'interprétation du profil de mouvement de l'utilisateur dans la zone ne s'effectue qu'en vertu des critères mentionnés plus haut si l'utilisateur est reconnu comme cherchant une place de stationnement, tandis que l'utilisateur est alors reconnu comme cherchant une place de stationnement, s'il se déplace dans la zone pendant une durée supérieure à un temps minimal prédéterminé à une vitesse inférieure à une vitesse minimale et/ou s'il passe au moins une deuxième fois par au moins une portion de route donnée.

5. Procédé d'affichage de la probabilité de trouver une place de stationnement sur une portion de route donnée, un GPS présentant des données cartographiées mémorisées numériquement de même qu'un dispositif d'affichage permettant d'afficher les données cartographiées, GPS de radio localisation et radiolocalisation satellite, où au moins deux groupes de probabilité sont répartis selon des données de probabilité déterminées d'après un procédé selon l'une des revendications précédentes et où le groupe de probabilité est représenté graphiquement pour chaque portion de route repérée sur la carte.

6. Procédé selon la revendication 5, **caractérisé en ce que** l'on forme au total trois groupes de probabilité, dont un premier contient de données de forte probabilité, un deuxième des données de probabilité moyenne et un troisième des données de faible probabilité, tandis qu'à l'affichage des données cartographiées, les portions de route d'une probabilité découlant du premier groupe de probabilité sont indiquées en vert, les portions de route d'une probabilité découlant du deuxième groupe de probabilité sont indiquées en jaune et les portions de route d'une probabilité découlant du troisième groupe de probabilité sont indiquées en rouge.

7. Procédé selon l'une des revendications 5 ou 6, **caractérisé en ce que** les données cartographiées mémorisées numériquement contiennent des informations sur les interdictions de stationnement et ces dernières sont également présentées à l'affichage.

8. Procédé selon l'une quelconque des revendications 5 à 7, **caractérisé en ce que** l'affichage des probabilités déterminées s'effectue d'après un procédé selon la revendication 3 ou la revendication 4, dans la mesure où celle-ci se rapport à la revendication 3, en fonction du jour de la semaine et/ou de l'heure de la journée correspondant à l'affichage.
